(19) Europäisches Patentamt
European Patent Office
Office européen des brevets

(11) **EP 1 505 758 A1**

(12) **EUROPEAN PATENT APPLICATION**

(43) Date of publication:
**09.02.2005 Bulletin 2005/06**

(51) Int Cl.⁷: **H04L 1/06**, H04B 7/06, H04B 7/08

(21) Application number: **04017012.8**

(22) Date of filing: **19.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **07.08.2003 KR 2003054676**

(71) Applicants:
• **Samsung Electronics Co., Ltd.**
**Suwon-si, Gyeonggi-do 442-742 (KR)**
• **Yonsei University**
**Seoul (KR)**

(72) Inventors:
• **Shim, Sei-Joon**
**Seodaemun-gu Seoul (KR)**
• **Lee, Chung-Yong**
**Seodaemun-gu Seoul (KR)**
• **Chung, Jae-Hak**
**Yeongtong-gu Suwon-si Gyeonggi-do (KR)**
• **Hwang, Chan-Soo**
**Yeongtong-gu Suwon-si Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Method and apparatus for determining a shuffling pattern based on a minimum signal to noise ratio in a double space-time transmit diversity system**

(57) A method and apparatus for determining a shuffling pattern in a DSTTD. In the apparatus, a channel estimator estimates channel characteristics from a plurality of transmit antennas to a plurality of receive antennas. A shuffling pattern selector calculates a minimum receive SNR for each of all available shuffling patterns, and selects a shuffling pattern having the largest minimum receive SNR as the optimum shuffling pattern. This efficient shuffling pattern selection directly improves BER performance at a receiver.

FIG.3

**Description**

The present invention relates generally to a double space-time transmit diversity (DSTTD) system, and in particular, to a method and apparatus for selecting a shuffling pattern in a DSTTD system that shuffles data streams for transmission.

As a result of the rapid growth of the wireless mobile communication market and the increasing demands for diverse multimedia services in a radio environment, methods of transmitting increasing amounts of data and that at higher rates are being explored. Therefore, efficient use of limited frequency resources has emerged as a pressing issue. As a result, a new transmission scheme using multiple antennas is needed. The standardization working group for 3rd generation mobile communication systems, 3GPP (3rd Generation Partnership Project), is actively discussing new data transmission schemes using the MIMO (Multiple Input and Multiple Output) technology of transmitting/receiving data through multiple transmit/receive antennas in a mobile communication environment.

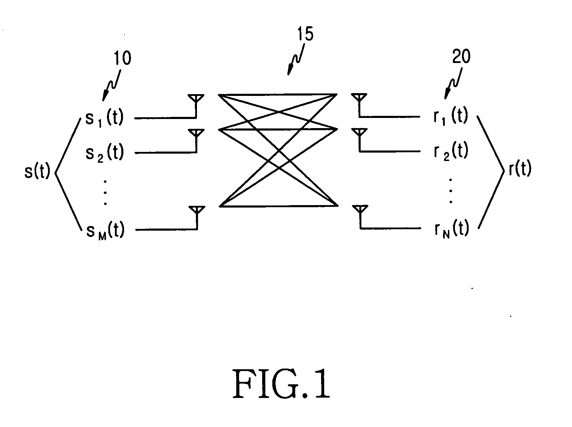

FIG. 1 illustrates a simplified transmission model for a conventional MIMO system. Referring to FIG. 1, the MIMO system is equipped with M transmit antennas 10 and M receive antennas 20. 's' denotes an (Mx1) signal vector transmitted from the M transmit antennas 10 and 'H' denotes a matrix representing the characteristics of a radio channel 15 that delivers the transmit signal vector s to a receiver. A received signal vector r received at the receiver through the N receive antennas is determined as follows:

$$r = Hs + w \qquad (1)$$

where the channel matrix H is an (NxM) matrix because the transmitter and the receiver use the M transmit antennas and N receive antennas, respectively, and the transmitted signals arrive at the receive antennas 20 in different paths 30. 'w' is Gaussian noise, which is an (Nx1) vector because it is induced to each receive antenna.

One of the MIMO techniques proposed by the 3GPP that is attracting a great deal of interest is DSTTD. The use of two STTD encoders based on conventional STTD coding effects transmit diversity, which renders the DSTTD feasible for situations requiring diversity-based performance improvement.

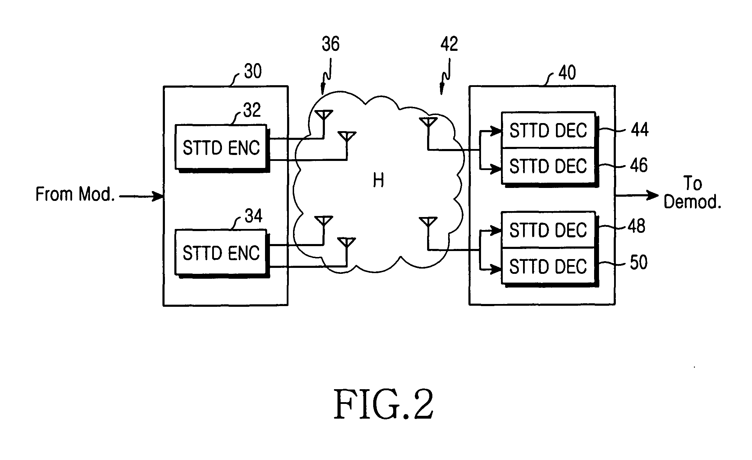

FIG. 2 is a schematic block diagram of a typical DSTTD system. Referring to FIG 2, a transmitter 31 comprises two STTD encoders (ENCs) 32 and 34, each connected to two of four transmit antennas 36, while a receiver 40 comprises STTD decoders (DECs) 44, 46, 48, and 50, each pair of which is connected to one of N receive antennas 42 (where N≥2).

The DSTTD system having the above-described configuration performs one DSTTD combining and signal detection for every two symbols. Thus, the process speed is twice as fast and the system complexity is reduced, compared to an STTD system using four transmit antennas.

Antenna shuffling is a technique for improving DSTTD performance in a radio channel environment with high antenna correlation. For antenna shuffling, symbols from the two STTD encoders 32 and 34 based on the four transmit antennas 36 are prioritized. That is, the antenna shuffling linearly changes channels. An antenna shuffling pattern is determined according to spatial channel correlation by the receiver.

After estimating channel characteristics, the receiver extracts a spatial correlation matrix representing a correlation between the transmitter and the receiver from the channel estimation information and determines an optimum shuffling pattern that minimizes the correlation. Although the correlation matrix must be an identity matrix to maintain full channel independency, off-orthogonal terms are produced due to noise and interference in real implementation. Thus, the receiver determines a shuffling pattern that minimizes the off-orthogonal terms and notifies the encoders of the transmitter of the shuffling pattern.

The conventional DSTTD system, however, selects a shuffling pattern based only on information that minimizes spatial correlation between channels on which data streams are transmitted, with no regard to SNR (Signal to Noise Ratio) having effects on BER (Bit Error Rate) at the receiver. Moreover, considering the correlation matrix is derived by two-dimensional computation, not one-dimensionally from the channel matrix, there are limitations in estimating a shuffling pattern that lead to optimum reception performance with use of the correlation matrix only.

Therefore, an aspect of the present invention is to substantially solve at least the above problems and/or disadvantages and to provide at least the advantages below.

It is the object of the present invention to provide a method and apparatus for determining a shuffling pattern for an optimum reception performance, and minimizing receiver complexity in a DSTTD system.

This object is solved by the subject matter of the independent claims. Preferred embodiments are defined in the dependent claims.

Another aspect of the present invention is to provide a method and apparatus for determining a shuffling pattern that minimizes error probability based on channel estimation information in a DSTTD system.

A further aspect of the present invention is to provide a method and apparatus for determining a shuffling pattern that maximizes a minimum receive SNR directly from channel estimation information in a DSTTD system.

The above is achieved by providing a method and apparatus for determining a shuffling pattern in a DSTTD system.

According to one aspect of the present invention, in a method of determining a shuffling pattern in a DSTTD system in which DSTTD coded data streams are shuffled in the shuffling pattern prior to transmission, channel characteristics are estimated from a plurality of transmit antennas to a plurality of receive antennas, and an optimum shuffling pattern that maximizes a receive SNR is selected according to the estimated channel characteristics.

According to another aspect of the present invention, in an apparatus for determining a shuffling pattern in a DSTTD system in which DSTTD coded data streams are shuffled in the shuffling pattern prior to transmission, a channel estimator estimates channel characteristics from a plurality of transmit antennas to a plurality of receive antennas, a shuffling pattern selector selects an optimum shuffling pattern that maximizes a receive SNR according to the estimated channel characteristics, a plurality of decoders decodes signals received from the transmit antennas at the receive antennas and deshuffles the decoded signals in the optimum shuffling pattern, and a detector detects data symbols from the deshuffled signals.

The above features and advantages of the present invention will become more apparent from the following detailed description when taken in conjunction with the accompanying drawings in which:

FIG 1 illustrates a simplified transmission model for a conventional MIMO system; FIG. 2 is a schematic block diagram of a conventional DSTTD system; FIG 3 is a block diagram of a transmitter in a DSTTD system supporting shuffling according to an embodiment of the present invention;

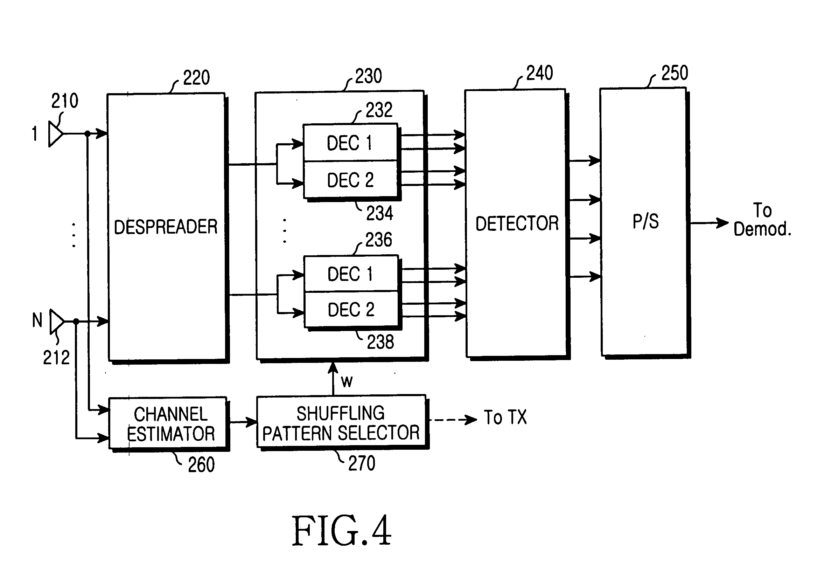

FIG. 4 is a block diagram of a receiver in the DSTTD system supporting shuffling according to the embodiment of the present invention;

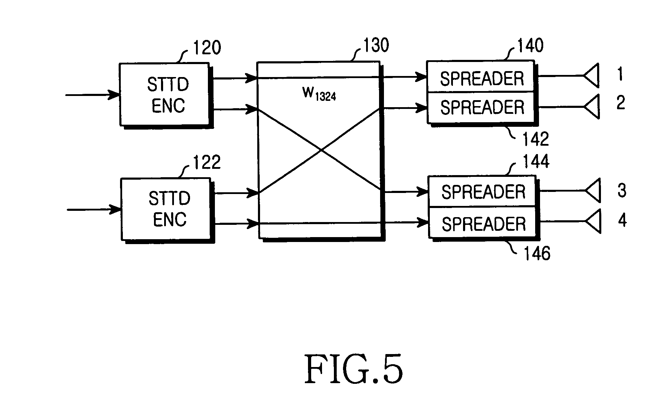

FIG. 5 illustrates an example of shuffling in the DSTTD system supporting shuffling according to the embodiment of the present invention;

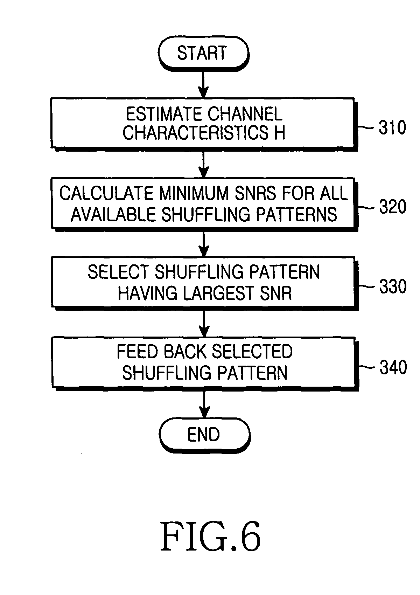

FIG. 6 is a flowchart illustrating an operation for deciding a shuffling pattern according to the embodiment of the present invention; and

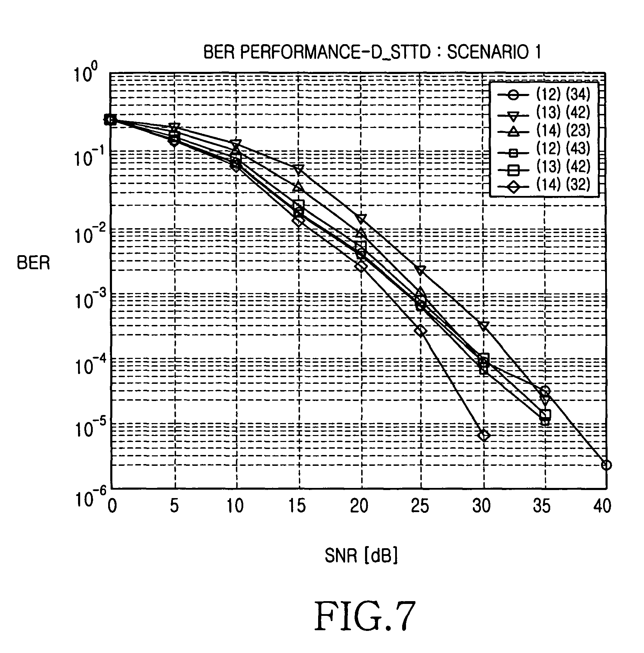

FIGs. 7, 8, and 9 are graphs illustrating BER performance for all available shuffling patterns.

A preferred embodiment of the present invention will be described herein below with reference to the accompanying drawings. In the following description, well-known functions or constructions are not described in detail since they would obscure the invention in unnecessary detail.

The present invention as described below pertains to a method of determining, based on channel estimation information, a shuffling pattern leading to a largest minimum receive SNR that has a direct effect on BER performance at a receiver in a DSTTD system supporting shuffling.

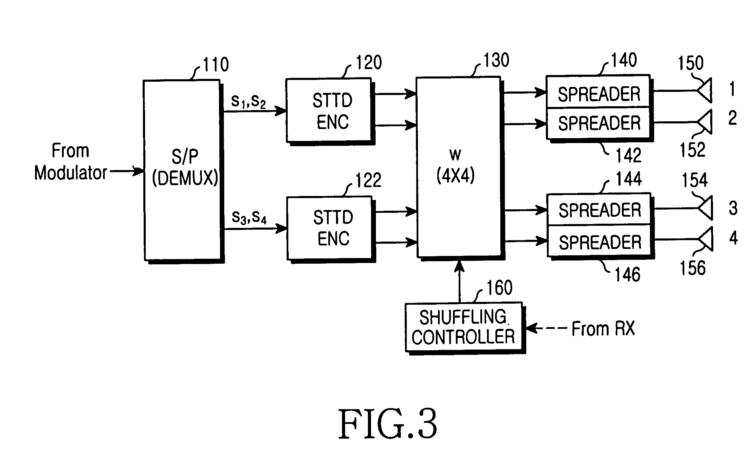

FIG. 3 is a block diagram of a transmitter in a DSTTD system supporting shuffling according to an embodiment of the present invention. Referring to FIG. 3, a demultiplexer (DEMUX) 110 separates one data stream including a plurality of modulated data symbols into two different data streams and feeds them to STTD encoders 120 and 122, respectively. The STTD encoders 120 and 122, each generate two data streams for the input of one data stream. Consequently, they together output four data streams.

For antenna shuffling, a shuffler 130 shuffles the signals received from the four antenna-based STTD encoders 120 and 122 according to a shuffling pattern provided from a shuffling controller 160. The antenna shuffling linearly changes channels from the transmitter to a receiver. The receiver determines a shuffling pattern, which will be described in more detail later.

Spreaders 140, 142, 144, and 146 spread the shuffled four data streams received from the shuffler 130 with multiple spreading codes and assign the spread signals to transmit antennas 150, 152, 154, and 156, respectively.

The transmission signals assigned to the first and second transmit antennas 150 and 152 are orthogonal to each other due to the STTD coding. Likewise, orthogonal transmission signals are assigned to the third and fourth transmit antennas 154 and 156. The signal transmitted from each antenna is interfered with by the signals from the other STTD encoder. Therefore, transmit diversity is effected on each data symbol.

FIG. 4 is a block diagram of a receiver in the DSTTD system supporting shuffling according to the embodiment of the present invention. Referring to FIG. 4, a despreader 220 despreads signals received through N receive antennas 210 to 212, respectively. Each pair of STTD decoders 232 to 238 performs direct space-time rake combining for each antenna.

A signal received at an nth receive antenna for a DSTTD coded signal transmitted over the channel (matrix H) is determined by:

$$[r_n(0) r_n(1)] = \frac{1}{\sqrt{2}} [h_{n1} \ h_{n2} \ h_{n3} \ h_{n4}] \begin{bmatrix} s_1 & s_2 \\ -s_2^* & s_1^* \\ s_3 & s_4 \\ -s_4^* & s_3^* \end{bmatrix} + [w_n(0) \ w_n(1)]$$

$$\cdots \cdots (2)$$

where $h_{ni}$ is a channel coefficient for an ith symbol time, $s_j$ is a jth transmitted symbol, and $w_n(\cdot)$ is Gaussian noise.

A channel estimator 260 estimates channel characteristics from the transmit antennas to the receive antennas using the signals received through the receive antennas, determines an optimum shuffling pattern W, and provides it to the decoders 232 to 238 and the transmitter. The decoders 232 to 238 deshuffle the combined signals in the original order according to the shuffling pattern W.

Each of the DSTTD combined signals are affected by interference signals generated from two transmit antennas connected to the other STTD encoder. Therefore, a detector 240 detects data symbols by applying an algorithm designed for canceling the interference, such as iterative MMSE (Minimum Mean Square Error), to the signals output from the decoders 232 to 238. A parallel to serial converter (P/S) converts the data symbols to a serial symbol sequence and feeds it to a demodulator (not shown).

If the channel coefficient of each antenna is

$$h_n = [h_{n1} \ h_{n2} \ h_{n3} \ h_{n4}]^T \tag{3}$$

a new channel coefficient after antenna shuffling is

$$\widetilde{h}_n = W^T h_n$$

$$\cdots \cdots (4)$$

where W is a 4x4 permutation matrix representing the shuffling pattern and superscript T denotes permutation matrix.

FIG. 5 illustrates an exemplary shuffling in a shuffling pattern (1, 3, 2, 4). As illustrated in FIG. 5, the shuffler 130 exchanges a second data stream with a third data stream

A minimum receive SNR, which represents the worst radio channel environment, is a dominant factor that directly determines the BER performance of the receiver. Therefore, a shuffling pattern selector 270 detects a shuffling pattern that maximizes the minimum receive SNR.

The receiver in the DSTTD system uses a ZF (Zero Forcing) or MMSE detection algorithm and detects data from each data stream by the algorithm. The receive SNR of a kth data stream detected by the algorithm is determined by:

$$SNR_k = \frac{\rho}{M} \frac{1}{[(H^H H)^{-1}]_{k,k}}$$

$$\cdots \cdots (5)$$

where $\rho$ is the total SNR of the transmitted signal, M is the number of the transmit antennas, H is a channel matrix, superscript H denotes Hermitian matrix, and subscript k,k denotes the index of the data stream.

H is a matrix representing channel characteristics varying with the DSTTD system, that is, channel characteristics appearing after shuffling in the transmitter. For four transmit antennas and two receive antennas, H is expanded with respect to time from Eq. (2) to

$$\begin{bmatrix} r_1(0) \\ r_1(1) \\ r_2(0) \\ r_2(1) \end{bmatrix} = \frac{1}{\sqrt{2}} \begin{bmatrix} h_{11} & -h_{12} & h_{13} & -h_{14} \\ h_{12}^{\cdot} & h_{11}^{\cdot} & h_{14}^{\cdot} & h_{13}^{\cdot} \\ h_{21} & -h_{22} & h_{23} & -h_{24} \\ h_{22}^{\cdot} & h_{21}^{\cdot} & h_{24}^{\cdot} & h_{23}^{\cdot} \end{bmatrix} \begin{bmatrix} s_1 \\ s_2^{\cdot} \\ s_3 \\ s_4^{\cdot} \end{bmatrix} + \begin{bmatrix} w_1(0) \\ w_1(1) \\ w_2(0) \\ w_2(1) \end{bmatrix}$$

$$\cdots\cdots (6)$$

From Eq. (6), the minimum receive SNR is developed to

$$SNR_{min} = \frac{\rho}{M} \frac{1}{\max\left[(H^H H)^{-1}\right]_{k,k}}$$

$$\geq \frac{\rho}{M} \frac{1}{\lambda_{max}((H^H H)^{-1}))}$$

$$= \frac{\rho}{M} \lambda_{min}(H^H H)$$

$$\cdots\cdots (7)$$

where $\lambda_{max}(\cdot)$ and $\lambda_{min}(\cdot)$ are functions of computing the largest and least eigen values of the channel matrix, respectively.

As a result, a shuffling pattern $W_{min}$ is detected, which maximizes Eq. (7) for the channel matrix H, which varies depending on shuffling. This can be expressed as follows:

$$W_{min} = \arg \max_{w} \lfloor \lambda_{min}(W^H H^H HW) \rfloor \qquad (8)$$

where W is a matrix, which can be considered as a shuffling pattern. Due to the symmetrical structure of the system, all available shuffling patterns are shown below in Eq. (9).

$$W_{1234} = \begin{bmatrix} 1 & 0 & 0 & 0 \\ 0 & 1 & 0 & 0 \\ 0 & 0 & 1 & 0 \\ 0 & 0 & 0 & 1 \end{bmatrix} \quad W_{1243} = \begin{bmatrix} 1 & 0 & 0 & 0 \\ 0 & 1 & 0 & 0 \\ 0 & 0 & 0 & 1 \\ 0 & 0 & 1 & 0 \end{bmatrix} \quad W_{1324} = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$W_{1342} = \begin{bmatrix} 1 & 0 & 0 & 0 \\ 0 & 0 & 1 & 0 \\ 0 & 0 & 0 & 1 \\ 0 & 1 & 0 & 0 \end{bmatrix} \quad W_{1423} = \begin{bmatrix} 1 & 0 & 0 & 0 \\ 0 & 0 & 0 & 1 \\ 0 & 1 & 0 & 0 \\ 0 & 0 & 1 & 0 \end{bmatrix} \quad W_{1432} = \begin{bmatrix} 1 & 0 & 0 & 0 \\ 0 & 0 & 0 & 1 \\ 0 & 0 & 1 & 0 \\ 0 & 1 & 0 & 0 \end{bmatrix}$$

$$\cdots\cdots (9)$$

The shuffling pattern selector 270 selects a $W_{min}$ that satisfies Eq. (8) from among the above shuffling patterns and feeds back information about the selected shuffling pattern to the transmitter.

FIG. 6 is a flowchart illustrating an operation for determining a shuffling pattern according to the embodiment of the present invention. This operation is performed by the receiver in the DSTTD system where DSTTD coded data streams are shuffled in a predetermined shuffling pattern prior to transmission.

Referring to FIG. 6, the receiver estimates channel characteristics from a plurality of transmit antennas to receive antennas in step 310 and calculates a minimum SNR for each of all available shuffling patterns, based on the estimated channel characteristics in step 320. In step 330, the receiver selects a shuffling pattern having a largest minimum SNR as an optimum shuffling pattern. The receiver feeds back information about the selected shuffling pattern to the transmitter in step 340.

The performance of the receiver using the inventive shuffling pattern determining algorithm was simulated under an environment having various channel correlations. The simulation results will be presented below.

$$H = R_{RX}^{1/2} H_{iid} R_{TX}^{1/2} \tag{10}$$

The simulation was under the conditions of M transmit antennas and N receive antennas. In Eq. (10), $H_{iid}$ is an NxM i.i.d. (independent and identically distributed) complex Gaussian channel matrix with zero mean and unit variance, and $R_{RX}$ and $R_{TX}$ are an NxN reception correlation matrix and an MxM transmission correlation matrix, respectively.

Channel correlation models used for the simulation are listed in Table 1 below. Because there is usually sufficient scattering around the receiver and thus, channel independency is ensured between receive antennas, it can be said that no receive correlation exists. Therefore, $R_{RX}=1$.

(Table 1)

| Model | Parameter |
|---|---|
| S1 | One transmitter cluster. AOD=$\pi$/2. AOS=$\pi$/30; $R_{RX}$=1 |
| S2 | Two equal transmit clusters. AOD=[$\pi$/6, $\pi$/2]. AOS=[$\pi$/30, $\pi$/20]; $R_{RX}$=1 |
| S3 | $R_{TX}$=toeplitz([1.075 0.5 0.25]); $R_{RX}$=1 |

For channel S1, there is no receive correlation and a channel with a transmit correlation is generated from one cluster. The AOD (Angle Of Departure) and AOS (Angle Of Spread) are $\pi$/2 and $\pi$/30, respectively. An optimum antenna shuffling pattern for S1 is (1, 4, 3, 2). FIG. 7 illustrates BER performance that can be achieved by all available shuffling patterns for channel S1.

Table 2 lists minimum SNRs and channel correlations for the shuffling patterns available to channel S1. The minimum SNR is a criterion by which an optimum shuffling pattern is selected in the present invention, whereas the channel correlation is the criterion in the conventional technology.

(Table 2)

| Shuffling pattern | Present invention (minimum SNR) | Conventional (channel correlation) |
|---|---|---|
| (1, 2, 3, 4) | 0.6770 | 0.0010 |
| (1, 3, 2, 4) | 0.2411 | 0.0050 |
| (1, 4, 2, 3) | 0.3302 | 0.0022 |
| (1, 2, 4, 3) | 0.7609 | 0.0028 |
| (1, 3, 4, 2) | 0.7786 | 0.0004 (selected) |
| (1, 4, 3, 2) | 0.8021 (selected) | 0.0030 |

According to Table 2, the shuffling pattern (1, 4, 3, 2) having the largest minimum SNR, 0.8021 is selected in the present invention, while the shuffling pattern (1, 3, 4, 2) having the least channel correlation, 0.0004 is selected in the conventional method. Because the selection is made based on the best receive SNR characteristic, the same shuffling pattern (1, 4, 3, 2) as resulted from the simulation is selected in the present invention.

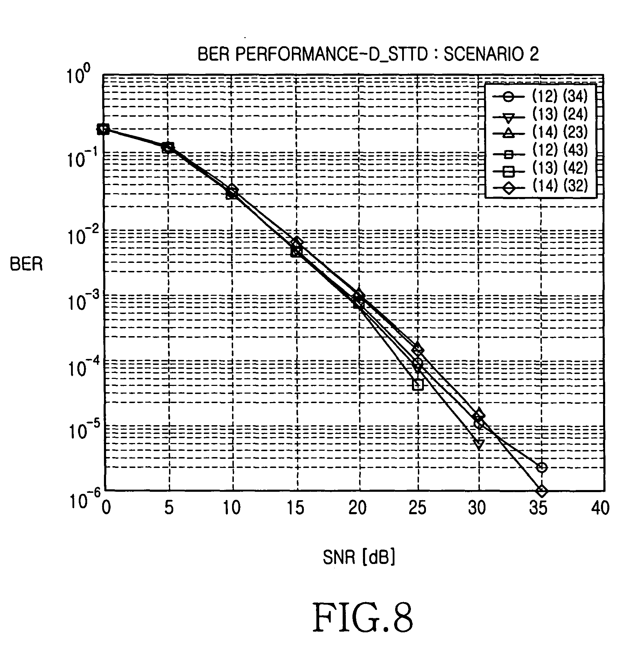

For channel S2, channels with transmit correlation are generated from two clusters. Their AODs and AOSs are $\pi$/6 & $\pi$/2 and $\pi$/30 & $\pi$/20, respectively. FIG. 8 illustrates simulation results for all shuffling patterns available to channel S2. Table 3 lists minimum SNRs as data for selecting an optimum shuffling pattern in the present invention and channel correlations as data for selecting an optimum shuffling pattern in the conventional method, for the shuffling patterns available to channel S2.

(Table 3)

| Shuffling pattern | Present invention (minimum SNR) | Conventional (channel correlation) |
|---|---|---|
| (1, 2, 3, 4) | 1.0226 | 0.0021 |
| (1, 3, 2, 4) | 1.1186 | 0.0044 |
| (1, 4, 2, 3) | 1.1152 | 0.0045 |
| (1, 2, 4, 3) | 1.1321 (selected) | 0.0065 |
| (1, 3, 4, 2) | 1.1109 | 0.0018 (selected) |
| (1, 4, 3, 2) | 1.0154 | 0.0050 |

It is noted from FIG. 8 that S2 offers the best BER performance in the shuffling pattern of (1, 2, 4, 3) or (1, 3, 4, 2). Referring to Table 3, the present invention selects the shuffling pattern (1, 3, 4, 2) having the largest minimum SNR, 1.1321, while the conventional method selects the shuffling pattern having the least channel correlation, 0.0018.

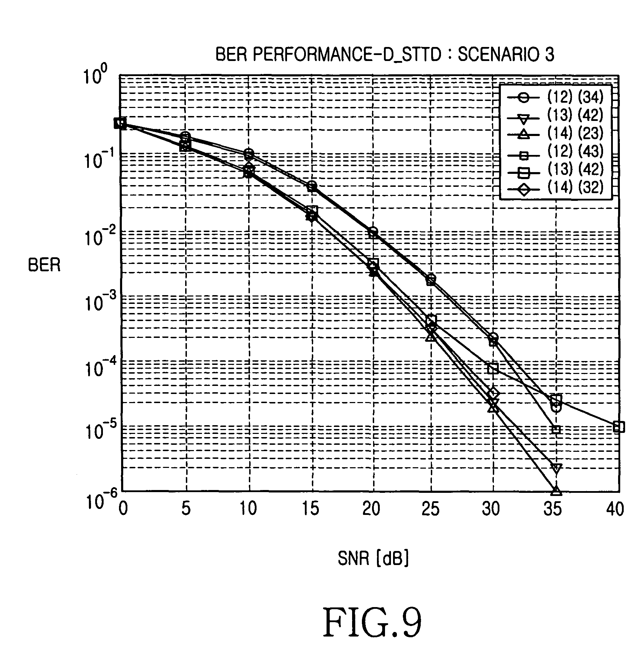

For channel S3, the transmit correlation is forcibly applied and the transmit correlation matrix $R_{TX}$=toeplitz(1 0.75 0.5 0.25). FIG. 9 illustrates simulation results for all shuffling patterns available to channel S3. Table 4 lists minimum SNRs as data for selecting an optimum shuffling pattern in the present invention and channel correlations as data for selecting an optimum shuffling pattern in the conventional method, for the shuffling patterns available to channel S3.

(Table 4)

| Shuffling pattern | Present invention (minimum SNR) | Conventional (channel correlation) |
|---|---|---|
| (1, 2, 3, 4) | 0.3381 | 0.0064 |
| (1, 3, 2, 4) | 0.7509 | 0.0042 |
| (1, 4, 2, 3) | 0.7940 | 0.0018 (selected) |
| (1, 2, 4, 3) | 0.3437 | 0.0044 |
| (1, 3, 4, 2) | 0.7426 | 0.0105 |
| (1, 4, 3, 2) | 0.7952 (selected) | 0.0041 |

Referring to Table 4, the present invention selects the shuffling pattern (1, 4, 2, 3) having the largest minimum SNR, 0.7952.

The simulation reveals that the conventional method does not present a uniform decision criterion for the shuffling patterns, $W_{1324}$, $W_{1423}$, $W_{1342}$, and $W_{1432}$ having similar performance, while the present invention presents a uniform decision criterion for these shuffling patterns. Therefore, it is concluded that the present invention is objective in determining an optimum shuffling pattern, compared to the conventional method.

According, in the present invention, an optimum shuffling pattern is efficiently determined in a DSTTD system supporting shuffling. In the shuffling pattern determining algorithm of the present invention, a receiver estimates channels and calculates from the channel estimation information received SNRs that directly affect the BER performance of the receiver, without rebuilding a spatial channel correlation matrix. Therefore, reception performance is improved.

While the present invention has been shown and described with reference to a certain preferred embodiment thereof, it will be understood by those skilled in the art that various changes in form and details may be made therein without departing from the scope of the present invention as defined by the appended claims.

**Claims**

1. A method of determining a shuffling pattern in a double space-time transmit diversity-system in which double space-time transmit diversity coded data streams are shuffled in the shuffling pattern prior to transmission, comprising the steps of:

    estimating channel characteristics from a plurality of transmit antennas to a plurality of receive antennas; and
    selecting an optimum shuffling pattern that maximizes a receive signal to noise ratio based on the estimated channel characteristics.

2. The method of claim 1, wherein the step of selecting the optimum shuffling pattern comprises the steps of:

calculating a minimum receive signal to noise ratio for each of all available shuffling patterns; and selecting a shuffling pattern having a largest minimum receive signal to noise ratio as the optimum shuffling pattern.

3. The method of claim 1 or 2, wherein in the step of selecting the optimum shuffling pattern, the optimum shuffling pattern maximizes

$$W_{min} = \arg \max_{w} \llcorner \lambda_{min}(W^H H^H HW) \lrcorner$$

where $\lambda_{min}$ is a function of computing a least eigen value, W is a permutation matrix representing all the available shuffling patterns, and H is a channel matrix representing the channel characteristics.

4. An apparatus for determining a shuffling pattern in a double space-time transmit diversity-system in which double space-time transmit diversity coded data streams are shuffled in the shuffling pattern prior to transmission, comprising:

a channel estimator for estimating channel characteristics from a plurality of transmit antennas to a plurality of receive antennas; a shuffling pattern selector for selecting an optimum shuffling pattern that maximizes a receive signal to noise ratio based on the estimated channel characteristics; a plurality of decoders for decoding signals received from the plurality of transmit antennas at the plurality of receive antennas, and deshuffling the decoded signals in the optimum shuffling pattern; and a detector for detecting data symbols from the deshuffled signals.

5. The apparatus of claim 4, wherein the shuffling pattern selector calculates a minimum receive signal to noise ratio for each of all available shuffling patterns, and selects a shuffling pattern having a largest minimum receive signal to noise ratio as the optimum shuffling pattern.

6. The apparatus of claim 4 or 5, wherein the shuffling pattern selector selects the optimum shuffling pattern maximizes

$$W_{min} = \arg \max_{w} \llcorner \lambda_{min}(W^H H^H HW) \lrcorner$$

where $\lambda_{min}$ is a function of computing a least eigen value, W is a permutation matrix representing all the available shuffling patterns, and H is a channel matrix representing the channel characteristics.

7. The apparatus of one of claims 4 to 6, wherein the shuffling pattern selector feeds back information about the optimum shuffling pattern to a transmitter.

FIG.1

FIG.2

EP 1 505 758 A1

FIG.3

FIG.4

EP 1 505 758 A1

FIG.5

START

ESTIMATE CHANNEL
CHARACTERISTICS H ~ 310

CALCULATE MINIMUM SNRS FOR ALL
AVAILABLE SHUFFLING PATTERNS ~ 320

SELECT SHUFFLING PATTERN
HAVING LARGEST SNR ~ 330

FEED BACK SELECTED
SHUFFLING PATTERN ~ 340

END

FIG.6

FIG.7

FIG.8

FIG.9

**European Patent Office**

## EUROPEAN SEARCH REPORT

Application Number

EP 04 01 7012

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/196842 A1 (ONGGOSANUSI EKO N ET AL) 26 December 2002 (2002-12-26)<br>* abstract *<br>* paragraphs [0070] - [0072] *<br>* paragraphs [0082] - [0098] *<br>* figures 3,4 * | 1-7 | H04L1/06<br>H04B7/06<br>H04B7/08 |
| X | US 2003/063654 A1 (ONGGOSANUSI EKO N ET AL) 3 April 2003 (2003-04-03)<br>* abstract; figure 2d *<br>* paragraphs [0087] - [0117] * | 1-7 | |
| P,X | EP 1 437 852 A (SAMSUNG ELECTRONICS CO LTD) 14 July 2004 (2004-07-14)<br>* abstract *<br>* paragraphs [0025] - [0027] *<br>* figures 5,6 * | 1,2,4,5 | |
| | | | TECHNICAL FIELDS SEARCHED (Int.Cl.7)<br><br>H04L<br>H04B |

The present search report has been drawn up for all claims

| Place of search | Date of completion of the search | Examiner |
|---|---|---|
| Munich | 10 August 2004 | Helms, J |

EPO FORM 1503 03.82 (P04C01)

EP 1 505 758 A1

## ANNEX TO THE EUROPEAN SEARCH REPORT
## ON EUROPEAN PATENT APPLICATION NO.

EP 04 01 7012

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2004

| Patent document cited in search report | Publication date | Patent family member(s) | Publication date |
|---|---|---|---|
| US 2002196842 A1 | 26-12-2002 | NONE | |
| US 2003063654 A1 | 03-04-2003 | US 2003048857 A1 | 13-03-2003 |
| EP 1437852 A | 14-07-2004 | EP 1437852 A2 | 14-07-2004 |
| | | US 2004136465 A1 | 15-07-2004 |